Europäisches Patentamt

European Patent Office

Office européen des brevets

(19)

(11) Publication number : **0 466 664 A1**

(12) **EUROPEAN PATENT APPLICATION**

(21) Application number : **91830304.1**

(22) Date of filing : **09.07.91**

(51) Int. Cl.⁵ : **B62D 33/06, B62D 49/06**

(30) Priority : **12.07.90 IT 5314490 U**

(43) Date of publication of application :
**15.01.92 Bulletin 92/03**

(84) Designated Contracting States :
**AT CH DE ES FR GB LI**

(71) Applicant : **SAME S.p.A.**
**Viale F. Cassani, 14**
**I-24047 Treviglio Bergamo (IT)**

(72) Inventor : **Vicentini, Vittorio**
**Viale F. Cassani, 14**
**I-24047 Treviglio (Bergamo) (IT)**

(74) Representative : **Buzzi, Franco et al**
**c/o Jacobacci-Casetta & Perani S.p.A. Via**
**Alfieri, 17**
**I-10121 Torino (IT)**

(54) Driving station for tractors, particularly garden tractors.

(57)    A driving position (6) for tractors (1), particularly garden tractors, having, at the front, an integral unit (7) on which are grouped the steering wheel (22), control levers and switches (28-36) and an instrument panel (24) with display instruments (26, 27) and, at the rear, a seat (8) supported by a structure (9) which can pivot between a lowered position of use and a raised position for allowing access to the longitudinal transmission shaft (5) of the tractor (1).

EP 0 466 664 A1

Jouve, 18, rue Saint-Denis, 75001 PARIS

FIG. 2

The present invention relates to a driving position for tractors, particularly garden tractors, of the type comprising a driving and control unit and a driver's seat arranged facing each other along a longitudinal transmission shaft of the tractor, and in which the seat is situated substantially between the mudguards of the tractor's rear wheels.

The object of the present invention is to provide a driving position of the type defined above which is practical, compact and functional both as regards the use of the tractor and the accessibility of the longitudinal transmission shaft for maintenance.

According to the invention, this object is achieved by virtue of the fact that the front unit is constituted by a one-piece unit on which are grouped the steering wheel, control levers and switches and an instrument panel with displays, and in that the seat is supported by a structure which can pivot between a lowered position of use and a raised position for allowing access to the transmission shaft.

According to a preferred embodiment of the invention, the pivoted support structure for the seat comprises the two mudguards and an intermediate cowling to which the seat is fitted and which, in its lowered position, defines a cover for the transmission shaft.

Conveniently, there are associated with the pivoted structure means for locking it in its lowered position and means for supporting it in its raised position.

Conveniently, the pivoted structure is articulated by means of two transverse pins which are carried by the rear-axle housing of the tractor and on which the two rear mudguards are pivotable.

The invention will now be described in detail with reference to the appended drawings, provided purely by way of non-limiting example, in which:

Figure 1 is a schematic side elevation of a garden tractor according to the invention with the seat shown in its lowered position of use,

Figure 2 is a view similar to Figure 1 with the seat in its raised position,

Figure 3 is a section taken on the line III-III of Figure 1, on an enlarged scale,

Figure 4 is a partial perspective view of the tractor with the seat shown in the raised position of Figure 2, and

Figure 5 is a perspective view of the detail indicated by the arrow V of Figure 4 on an enlarged scale.

In the drawings, a garden tractor, generally indicated 1, has, in usual manner, front steerable wheels 2, rear wheels 3, a drive unit 4 and a longitudinal transmission shaft 5.

The driving position of the tractor, generally indicated 6, comprises a front driving and control unit 7 and a driver's seat 8 which are arranged facing each other along the longitudinal transmission shaft 5.

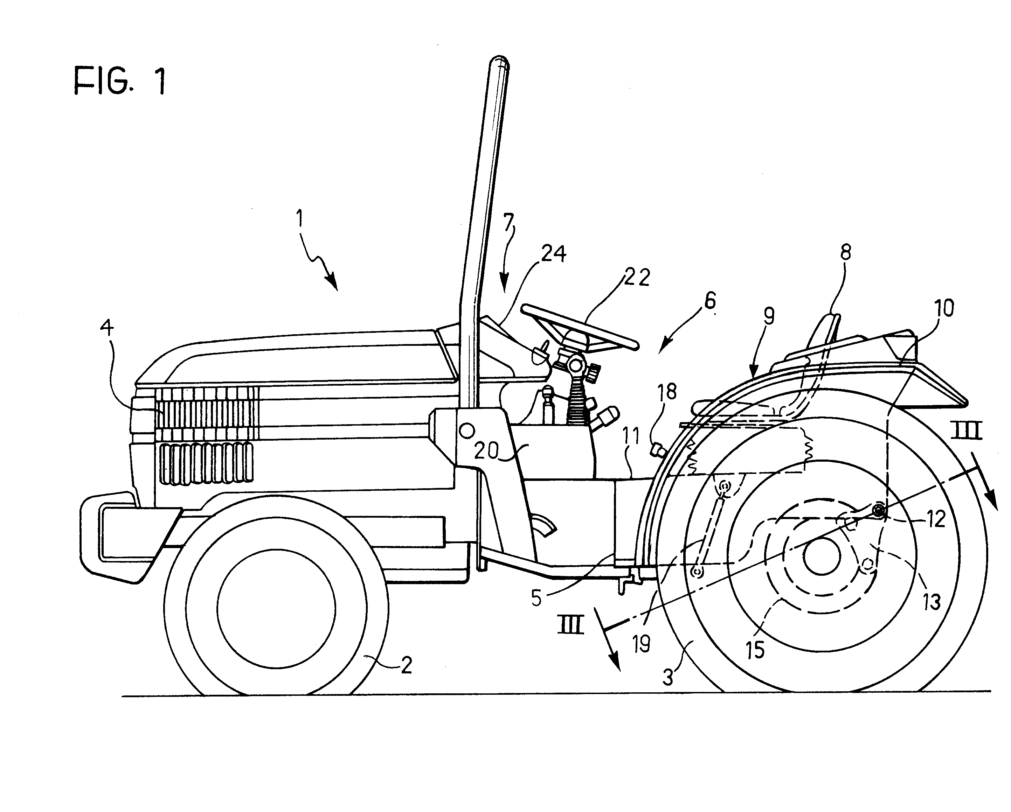

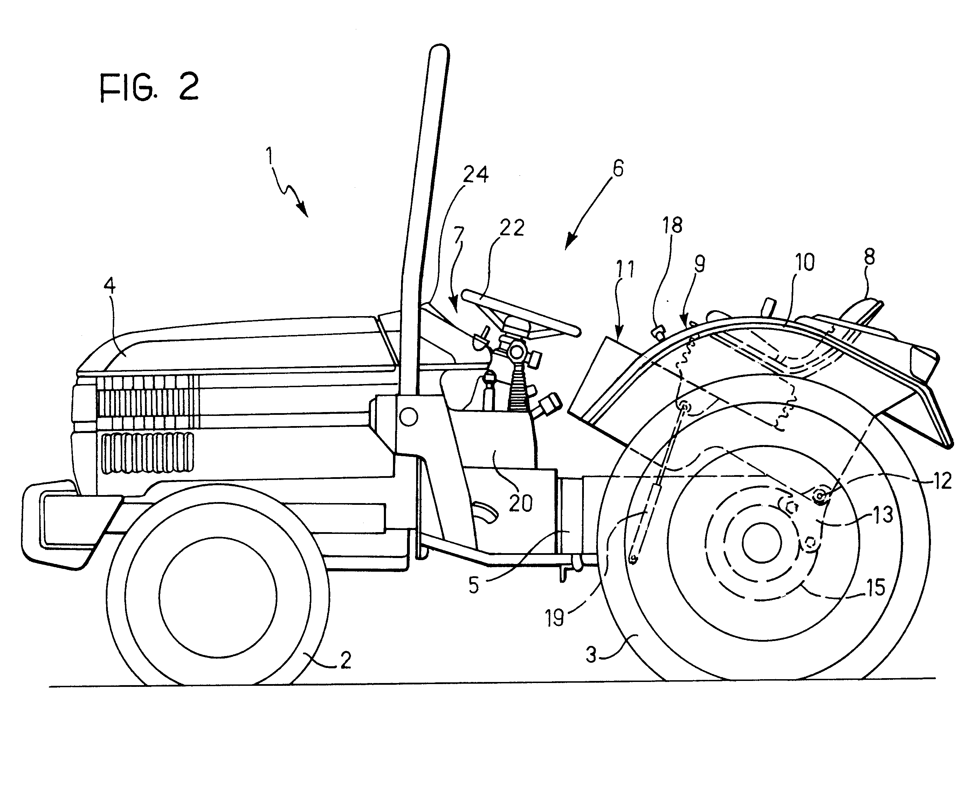

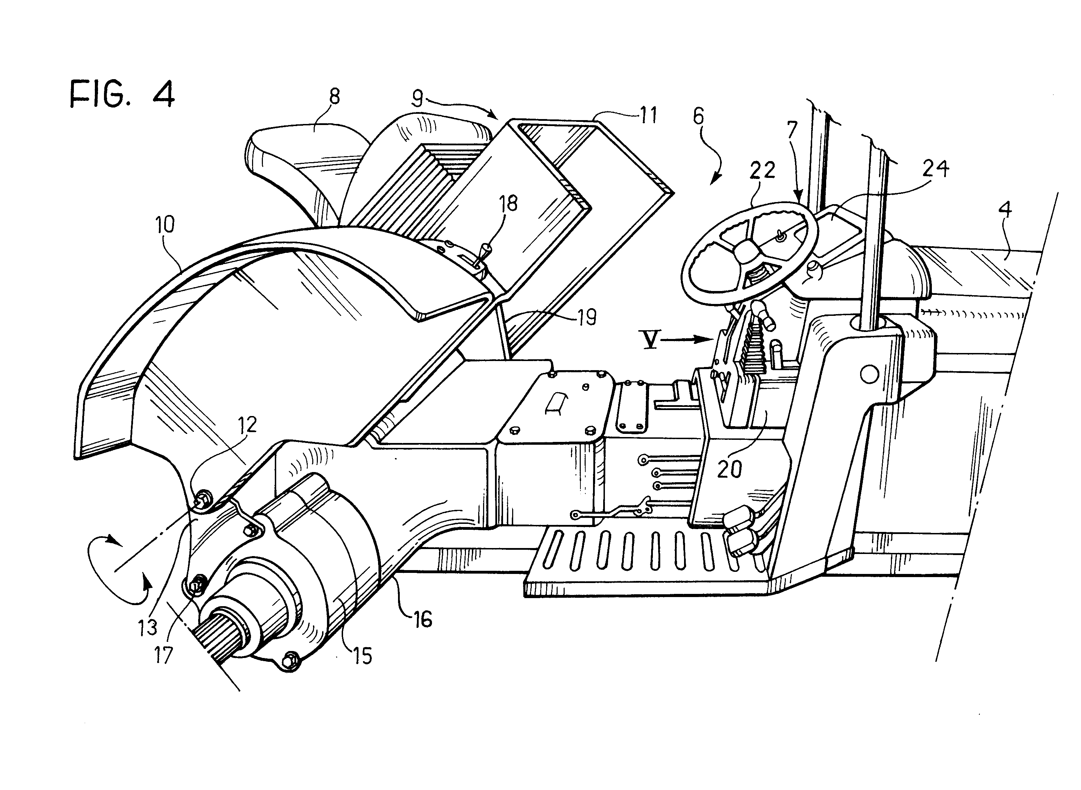

According to one aspect of the invention, the seat 8 is supported by a structure 9 which can pivot between a lowered position, which is shown in Figure 1 and corresponds to the normal position of use of the seat 8, and a raised position which is shown in Figures 2 and 4. The pivoted structure 9 is constituted by the two mudguards 10 of the rear wheels 3 and an intermediate cowling 11 on which the seat 8 is fitted and which, in its lowered position, is situated astride the longitudinal shaft 5 like a cover. In the raised position, the removal of the cowling 11 from the rear axle 5 affords convenient and easy access thereto for any maintenance operations.

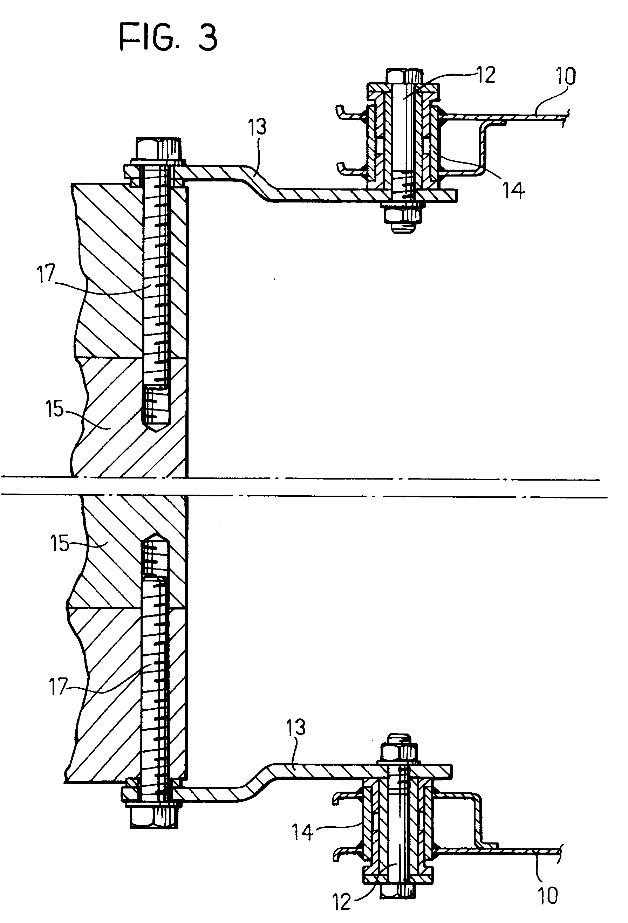

Figure 3 shows the articulation of the pivoted structure 9 to the structure of the tractor 1 in detail. This articulation is achieved by means of a pair of transverse pins 12 which are fixed to respective side plates 13 and on which two bushes 14 carried by the two mudguards 10 are rotatable. The two plates 13 are in turn fixed to the housing 15 of the rear transmission axle 16 by respective screws 17.

The pivoted structure 9 has a device (not shown) for locking it in its lowered position, the device possibly being constituted by a conventional latch member which cooperates with a catch fixed to the structure of the tractor. The locking device can be released, for example, by means of a lever 18 situated beside the cowling 11, beneath the seat 8.

An articulated strut may be used to keep the pivoted structure 9 in the raised position or, as in the embodiment illustrated, a gas spring 19 may be used, interposed between the structure of the tractor and the top of the cowling 11.

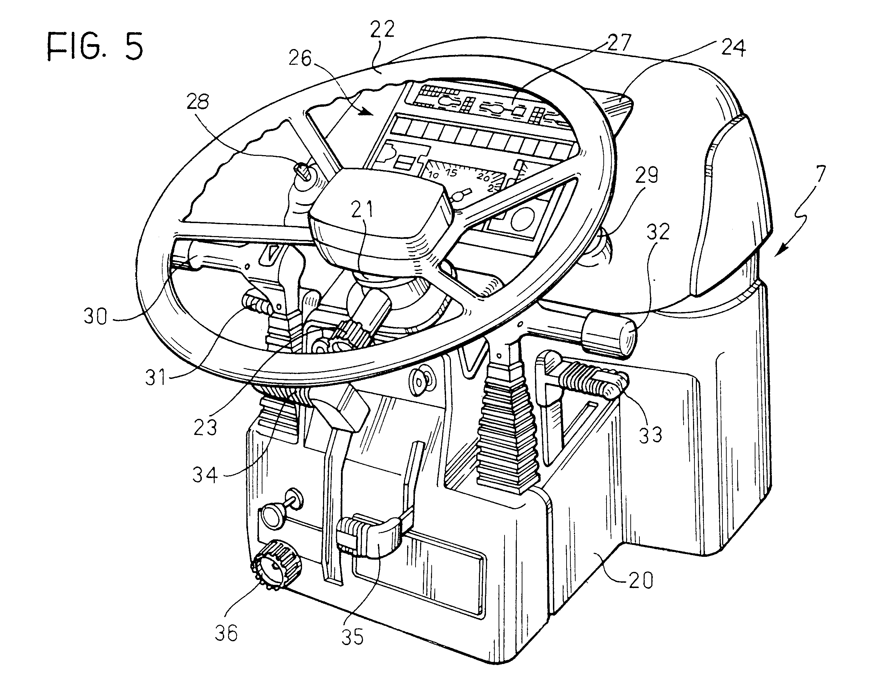

With reference now in greater detail to Figure 5, the front driving and control unit 7 is constituted by a one-piece unit on which all the steering and control members of the tractor 1 are grouped. The unit 7 comprises a base 20 from which the steering column 21 for the front wheels 2 projects, a steering wheel 22 being fixed thereto. Beneath the steering wheel 22 is a knob (23) for locking the column 21 against rotation.

On its top, behind the steering wheel 22, the base 10 carries an instrument panel 24 with indicator instruments and warning lights, generally indicated 26, as well as a display unit 27 for displaying the selected operating condition of the tractor's power take-off.

On the left-hand side of the instrument panel 24 is a switch 28 for the direction-indicator lights and on the right-hand side is a light switch 29.

A series of control levers projects from the base 20, all the levers being generally L-shaped for more convenient operation. More particularly, on the left-hand side of the steering wheel 22 are a reverse-gear lever 30 and a lever 31 for engaging the power take-off and, on the right-hand side, a gear lever 32 and a speed-range control lever 33. Centrally, beneath the steering wheel 22, are a friction-clutch control lever 34 for the power take-off and a hand accelerator control 35, as well as a hydraulic three-way diverter knob 36.

## Claims

1. A driving position for tractors, particularly garden tractors, which comprises a driving and control unit (7) and a driver's seat (8) arranged facing each other along a longitudinal transmission shaft (5) of the tractor (1), and in which the seat (8) is situated substantially between the mudguards (10) of the tractor's rear wheels (3), characterised in that:
   – the front unit is constituted by a one-piece unit (7) on which are grouped the steering wheel (22), control levers and switches (28-36), and an instrument panel (24) with instruments and displays (26, 27),
   – the seat (8) is supported by a structure (9) which can pivot between a lowered position of use and a raised position for allowing access to the longitudinal transmission shaft (5).

2. A driving position according to Claim 1, characterised in that the pivoted support structure (9) for the seat (8) comprises the two rear mudguards (10) and an intermediate cowling (11) to which the seat (8) is fitted and which, in its lowered position, defines a cover for the longitudinal transmission shaft (5).

3. A driving position according to Claim 1 or Claim 2, characterised in that there are associated with the pivoted structure (9) means (18) for locking it in its lowered position and means (19) for supporting it in its raised position.

4. A driving position according to any one of Claims 2 to 4, characterised in that the pivoted structure (9) is articulated about two transverse pivot pins (12) which are carried by the housing (16) of the rear axle (15) and on which the two rear mudguards (10) are pivotable.

5. A driving position according to Claim 1, characterised in that the levers and switches grouped on the one-piece unit (7) comprise:
   – a reverse-gear lever (31), a lever (31) for engaging the power take-off, and a hydraulic diverter (36) situated on that side of the unit (7) which is on the left-hand side of the steering wheel (22),
   – a gear lever (32) and a speed-range control lever (33) situated on that side of the unit (7) which is on the right-hand side of the steering wheel (22),
   – a lever (34) for operating the friction clutch for the power take-off and a hand accelerator control lever (35) situated beneath the steering wheel (22).

FIG. 1

EP 0 466 664 A1

FIG. 2

EP 0 466 664 A1

# FIG. 3

FIG. 4

FIG. 5

European Patent
Office

**EUROPEAN SEARCH REPORT**

Application Number

EP 91 83 0304

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| Y | FR-A-2 135 568 (CATERPILLAR)<br>* Figures 1,2; claims 1,2,4,7 * | 1 | B 62 D 33/06<br>B 62 D 49/06 |
| A |  | 5 |  |
|  | --- |  |  |
| Y | US-A-4 040 501 (HASWELL)<br>* Abstract; figure 5 * | 1 |  |
| A |  | 2-4 |  |
|  | --- |  |  |
| A | FR-A-1 248 849 (SALZMANN)<br>* Figure 1 * | 1 |  |
|  | --- |  |  |
| A | US-A-3 808 784 (GARDNER et al.)<br>* Abstract; column 4, lines 19-59 * | 1 |  |
|  | --- |  |  |
| A | US-A-3 353 423 (LEHMANN)<br>* Figure 4 * | 1 |  |
|  | --- |  |  |
| A | FR-A-1 197 235 (TRAKTORENWERK SCHOENBEEK)<br>* Whole document * | 4 |  |
|  | ----- |  | TECHNICAL FIELDS SEARCHED (Int. Cl.5)<br><br>B 62 D |

The present search report has been drawn up for all claims

| Place of search | Date of completion of the search | Examiner |
|---|---|---|
| THE HAGUE | 28-08-1991 | SCHMAL R. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                                                              
& : member of the same patent family, corresponding
   document

EPO FORM 1503 03.82 (P0401)